# FASCICULE DE BREVET EUROPEEN

(11) **EP 2 833 557 B1**
(45) Date de publication et mention de la délivrance du brevet: **13.01.2016**
(21) Numéro de dépôt: 14306054.9
(22) Date de dépôt: 30.06.2014
(51) Int. Cl.: H04B 1/69, B60R 9/06, B60R 9/10, B60R 13/10

(54) **Système comprenant un dispositif de fixation d'un objet à l'arrière et à l'extérieur d'un vehicule automobile et dispositif de transmission d'information du vehicule au dispositif de fixation**
System, das eine Befestigungsvorrichtung für ein Objekt hinten und außen an einem Kraftfahrzeug umfasst, und eine Vorrichtung zur Informationsübertragung vom Fahrzeug an die Befestigungsvorrichtung
System including a device for attaching an object at the rear and on the outside of a motor vehicle and device for transmitting information from the vehicle to the attachment device

(30) Priorité: 02.08.2013 FR 1357690
(43) Date de publication de la demande: 04.02.2015
(73) Titulaire: Renault S.A.S., 92100 Boulogne-Billancourt (FR)
(72) Inventeur: Fromentin, Philippe, 78320 LE MESNIL SAINT DENIS (FR); Candussi, Gilles, 95690 NESLE LA VALLEE (FR)

(56) Documents cités:
- FR-A1- 2 778 378
- US-A1- 2012 197 486

## Description

La présente invention concerne le domaine de la transmission d'informations d'un véhicule automobile à un dispositif de fixation d'objet embarqué à l'arrière et à l'extérieur dudit véhicule automobile tel que par exemple un vélo ou un bagage.

Un dispositif de fixation d'un cycle ou dispositif de porte-vélo comprend généralement une plateforme apte à recevoir un ou plusieurs véhicules sans moteur ayant au moins deux roues, appelés « cycles». La plateforme est généralement destinée à être fixée rigidement sur la boule d'attelage du véhicule par l'intermédiaire d'une interface de fixation réversible.

Afin de répondre aux législations en vigueur, il est nécessaire que la plaque minéralogique d'immatriculation soit visible à l'arrière du dispositif de porte-vélo ou porte-bagage, c'est-à-dire qu'elle doit être déportée par rapport audit dispositif de porte-vélo et être munie de son éclairage réglementaire. Il est également nécessaire de transmettre les informations de commande aux différents feux (clignotants, stop) disposés sur le dispositif de porte-vélo.

Il existe aujourd'hui des moyens de communication filaire permettant de transmettre les informations entre les commandes du véhicule automobile et les différents feux disposés sur le porte-vélo ou porte-bagage, ainsi qu'un réseau électrique particulier destiné à être branché au réseau électrique du véhicule automobile. Le document FR 2 778 378 (Beynel) décrit un dispositif de porte-vélos comprenant des moyens de signalisation reliés électriquement au véhicule par l'intermédiaire d'un câble électrique.

Toutefois, le branchement de tels moyens de communication filaire et du réseau électrique est difficile à mettre en oeuvre et nécessite une main d'oeuvre qualifiée.

En outre on connait via le document US2012/0197486 (Elliot) un dispositif de communication d'information entre un système télématique et un véhicule automobile comprenant un émetteur branché sur une prise diagnostic du véhicule et un récepteur capable de recevoir l'information à l'émetteur par liaison Bluetooth ou Wifi. Le système télématique comprend une batterie alimentée par exemple par des panneaux solaires. Toutefois ce document ne décrit aucun dispositif de fixation d'un objet à l'arrière et à l'extérieur du véhicule.

La présente invention a pour objectif de proposer un dispositif de transmission d'informations d'un véhicule automobile à un objet embarqué à l'arrière du véhicule facile à mettre en oeuvre, adaptable à tout type de véhicule automobile et peu onéreux.

L'invention a pour objet un système comprenant un dispositif de fixation d'un objet à l'arrière et à l'extérieur dudit véhicule automobile et un dispositif de transmission d'informations dudit véhicule automobile audit dispositif de fixation, ledit dispositif de fixation comportant une plateforme support apte à venir se fixer sur la structure arrière du véhicule et comprenant une plaque sensiblement verticale comportant sur l'une de ses faces, un système d'éclairage et une plaque minéralogique d'immatriculation, caractérisé en ce que le dispositif de transmission d'informations comprend un émetteur capable de se brancher sur une prise de diagnostic embarquée du véhicule, un récepteur fixé sur l'autre face de la plaque verticale et apte à recevoir par liaison sans fil les informations de commande d'allumage du système d'éclairage transmises par l'émetteur.

Il existe aujourd'hui une norme appelée « On-Board Diagnostic », mise en place pour contrôler les émissions polluantes des véhicules, mais également pour la gestion du moteur par les calculateurs électroniques. Afin de répondre à cette norme, chaque véhicule automobile possède un connecteur standard de type 16 broches obligatoirement situé à l'intérieur de l'habitacle du véhicule, par exemple sous le volant dans le compartiment à fusibles.

Ainsi, la connexion de l'émetteur du dispositif de transmission sur le connecteur du diagnostic embarqué est simple et facile à mettre en oeuvre puisque tous les connecteurs sont identiques d'un véhicule à l'autre.

Il est donc particulièrement aisé de réaliser la transmission sans fil des informations de commandes du système d'éclairage à l'aide d'un tel émetteur et d'un récepteur fixé sur le dispositif de fixation d'un objet.

Avantageusement, le récepteur est équipé d'une batterie.

La liaison sans fil est, par exemple, une liaison de type Wi-Fi®.

Le système d'éclairage peut comprendre deux lampes clignotantes et deux lampes d'éclairage du stop disposées de part et d'autre de la plaque minéralogique d'immatriculation et un moyen d'éclairage de ladite plaque minéralogique d'immatriculation.

Par exemple, le dispositif de fixation d'un objet est un dispositif de porte-vélo.

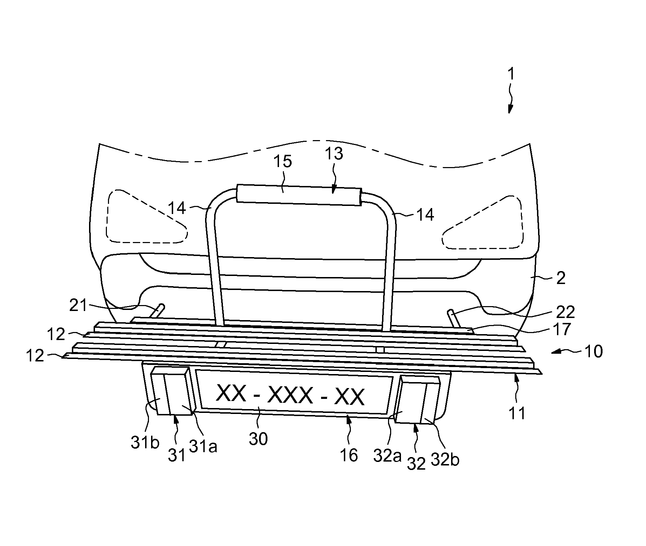

D'autres buts, caractéristiques et avantages de l'invention apparaîtront à la lecture de la description suivante, donnée uniquement à titre d'exemple non limitatif, et faite en référence au dessin annexé qui illustre, de manière schématique, une vue en perspective de la partie arrière d'un véhicule automobile sur lequel est monté un dispositif de fixation et une dispositif de transmission d'information selon l'invention.

Tel qu'illustré à la figure annexée, la partie arrière 1 d'un véhicule automobile comporte un pare-chocs arrière 2 et, de manière générale, deux organes d'attelage de secours, tels que des anneaux de remorquage, disposés symétriquement par rapport à un plan médian longitudinal au véhicule automobile.

La figure illustre un dispositif de fixation, référencé 10 dans son ensemble, permettant d'accrocher un objet (non représenté), tel que par exemple un cycle ou un bagage à l'arrière et à l'extérieur du véhicule automobile, et notamment à sa partie arrière 1. Le dispositif de fixation 10 comprend toutes les pièces intermédiaires comprises entre la partie arrière 1 du véhicule automobile et l'objet à accrocher. Le dispositif de fixation 10 comprend une plateforme support horizontale 11 comportant deux rainures 12 parallèles s'étendant selon une direction transversale du véhicule automobile et destinées chacune à supporter un cycle comportant au moins deux roues (non représenté), tel que par exemple une bicyclette.

Chaque bicyclette est placée sur la plateforme support de manière à ce que les roues de bicyclette soient au contact des rainures 12, la largeur desdites rainures 12 étant compatible avec celle d'un pneu de bicyclette. De cette manière, les deux bicyclettes sont arrimées à l'arrière et à l'extérieur du véhicule, en étant parallèles entre elles et disposées selon une direction transversale du véhicule.

Une anse tubulaire 13 présentant deux segments 14 parallèles et reliés entre eux par un segment de liaison horizontal 15, fait saillie selon un plan vertical et transversal de la plateforme support 11. L'anse tubulaire 13 contribue à renforcer l'arrimage des bicyclettes en les maintenant dans un plan sensiblement vertical.

Telle qu'illustrée, la plateforme support 11 comprend une plaque sensiblement verticale 16 comportant sur l'une de ses faces, un système d'éclairage 31, 32 et une plaque minéralogique d'immatriculation 30 pouvant être fixée de manière amovible.

Le système d'éclairage 31, 32 comprend deux lampes d'éclairage du stop 31a, 32a et deux lampes clignotantes 31b, 32b disposées de part et d'autre de la plaque minéralogique d'immatriculation 30. Le système d'éclairage comprend également un moyen d'éclairage (non représenté) de ladite plaque minéralogique d'immatriculation 30.

Un dispositif de transmission d'informations du véhicule automobile 1 au dispositif de fixation 10 comprend un émetteur (non représenté) capable de se brancher sur une prise de diagnostic embarquée non représentée) située dans le compartiment moteur ou dans l'habitacle du véhicule 1 et un récepteur non représenté) fixé sur l'autre face de la plaque verticale 16. Cet émetteur est classiquement appelé « bouchon BT » ou « Dongle » selon la terminologie anglosaxonne.

Le récepteur est apte à recevoir par liaison sans fil, de type Wi-Fi®, les informations de commande d'allumage du système d'éclairage 31, 32 transmises par l'émetteur.

Le récepteur est équipé d'une batterie afin d'alimenter le récepteur ainsi que le système d'éclairage 31, 32.

A titre d'exemple non limitatif, la plateforme support 11 est fixée à une traverse de liaison 17, par exemple par vissage, afin que la plateforme 11 soit bloquée en translation par rapport à la traverse de liaison 17. La traverse de liaison 17 est destinée à venir se fixer sur la structure arrière rigide 1 du véhicule.

Tel qu'illustré sur la figure, l'ensemble constitué par la plateforme support 11 et la traverse de liaison 17 est ancré sur un élément de carrosserie rigide placé derrière le pare-chocs 2 par l'intermédiaire de deux éléments de liaison 21, 22 disposés symétriquement l'un par rapport à l'autre par rapport à un plan médian vertical longitudinal du véhicule.

Par exemple, chaque élément de liaison 21, 22 comprend une tige comportant une première partie filetée (non référencée) venant se visser à la structure arrière 1 du véhicule, par exemple, à l'emplacement de l'organe d'attelage correspondant.

Grace à l'invention, on obtient un système pourvu d'un dispositif de transmission d'informations du véhicule automobile à un dispositif de fixation d'un objet à l'arrière d'un véhicule automobile facile à mettre en oeuvre et pouvant s'adapter à tous les types de véhicules automobiles.

## Revendications

1. Système comprenant un dispositif de fixation (10) d'un objet à l'arrière et à l'extérieur d'un véhicule automobile et un dispositif de transmission d'informations dudit véhicule automobile audit dispositif de fixation (10), ledit dispositif de fixation (10) comportant une plateforme support (11) apte à venir se fixer sur la structure arrière (1) du véhicule et comprenant une plaque sensiblement verticale (16) comportant sur l'une de ses faces, un système d'éclairage (31, 32) et une plaque minéralogique d'immatriculation (30), **caractérisé en ce que** le dispositif de transmission d'informations comprend un émetteur capable de se brancher sur une prise de diagnostic embarquée du véhicule, un récepteur fixé sur l'autre face de la plaque verticale (16) et apte à recevoir par liaison sans fil les informations de commande d'allumage du système d'éclairage (31, 32) transmises par l'émetteur.

2. Système selon la revendication 1, dans lequel le récepteur est équipé d'une batterie.

3. Système selon la revendication 1 ou 2, dans lequel la liaison sans fil est une liaison de type Wi-Fi®.

4. Système selon l'une quelconque des revendications 1 à 3, dans lequel le système d'éclairage (31, 32) comprend deux lampes clignotantes (32a, 32b) et deux lampes d'éclairage du stop (31a, 31b) disposées de part et d'autre de la plaque minéralogique d'immatriculation (30) et un moyen d'éclairage de ladite plaque minéralogique d'immatriculation (30).

5. Système selon l'une quelconque des revendications 1 à 4, dans lequel le dispositif de fixation (10) d'un objet est un dispositif de porte-vélo.

## Patentansprüche

1. System, das eine Befestigungsvorrichtung (10) für ein Objekt hinten und außen an einem Kraftfahrzeug und eine Vorrichtung zur Informationsübertragung vom Kraftfahrzeug an die Befestigungsvorrichtung (10) umfasst, wobei die Befestigungsvorrichtung (10) eine Stützplattform (11) aufweist, die an der Rückstruktur (1) des Fahrzeugs befestigt werden kann und eine im Wesentlichen vertikale Platte (16) umfasst, die auf einer ihrer Seiten ein Beleuchtungssystem (31, 32) und ein Kennzeichenschild (30) umfasst, **dadurch gekennzeichnet, dass** die Vorrichtung zur Informationsübertragung einen Sender, der zur Verbindung mit einem Diagnosestecker an Bord des Fahrzeugs in der Lage ist, einen Empfänger, der auf der anderen Seite der vertikalen Platte (16) befestigt und zum Empfang über eine drahtlose Verbindung von durch den Sender übertragenen Informationen zur Steuerung des Einschaltens des Beleuchtungssystems (31, 32) geeignet ist, umfasst.

2. System nach Anspruch 1, bei dem der Empfänger mit einer Batterie ausgestattet ist.

3. System nach Anspruch 1 oder 2, bei dem es sich bei der drahtlosen Verbindung um eine Verbindung des Typs Wi-Fi® handelt.

4. System nach einem der Ansprüche 1-3, bei dem das Beleuchtungssystem (31, 32) zwei Blinkleuchten (32a, 32b) und zwei Stoppleuchten (31a, 31b) umfasst, die auf beiden Seiten des Kennzeichenschilds (30) angeordnet sind, und ein Beleuchtungsmittel für das Kennzeichenschild (30).

5. System nach einem der Ansprüche 1-4, bei dem es sich bei der Befestigungsvorrichtung (10) für ein Objekt um eine Vorrichtung für ein Fahrrad handelt.

## Claims

1. System comprising a device (10) for attaching an object at the rear and on the outside of a motor vehicle and a device for transmitting information from said motor vehicle to said attachment device (10), said attachment device (10) comprising a support platform (11) suitable for attachment to the rear structure (1) of the vehicle and comprising a substantially vertical plate (16) including, on one of its faces, a lighting system (31, 32) and a mineralogical registration plate (30), **characterized in that** the device for transmitting information comprises an emitter capable of connecting to a diagnostic plug onboard the vehicle, a receiver attached to the other face of the vertical plate (16) and suitable for receiving, by wireless link, the lighting control information for the lighting system (31, 32) transmitted by the emitter.

2. System according to Claim 1, in which the receiver is equipped with a battery.

3. System according to Claim 1 or 2, in which the wireless link is a link of Wi-Fi® type.

4. System according to any one of Claims 1 to 3, in which the lighting system (31, 32) comprises two flashing lamps (32a, 32b) and two stop lighting lamps (31a, 31b) arranged on either side of the mineralogical registration plate (30) and a means for lighting said mineralogical registration plate (30).

5. System according to any one of Claims 1 to 4, in which the device (10) for attaching an object is a bicycle-holder device.
